# EUROPEAN PATENT APPLICATION

(11) **EP 3 988 906 A1**
(43) Date of publication of application: **27.04.2022**
(21) Application number: 20203393.2
(22) Date of filing: 22.10.2020
(51) Int. Cl.: G01G 7/06, G01G 19/52, G01M 1/12, B65D 19/38

(54) **SENSOR ELEMENT FOR DETECTING FORCE APPLIED TO THE SENSOR ELEMENT AND PALLET COMPRISING SUCH A SENSOR ELEMENT FOR DETECTING WEIGHT AND/OR WEIGHT DISTRIBUTION APPLIED TO IT**

(71) Applicant: InnovationLab GmbH, 69115 Heidelberg (DE)
(72) Inventor: TISSERANT, Jean-Nicolas, 69115 Heidelberg (DE); SAUVA, Sophie, 69115 Heidelberg (DE); GOETZKE, Hanns Hagen, 69115 Heidelberg (DE)
(74) Representative: Harrison, Robert John

(57) **Abstract**

A sensor element (10) for detecting force applied to the sensor element (10) is provided, the sensor element (10) comprising a first electrode (12) and a second electrode (16) arranged inside a housing (20), wherein the first electrode (12) and the second electrode (16) at least partially overlap. The housing (20) comprises a first rigid plate (21) and a second rigid plate (22) and the sensor element (10) further comprises an elastically deformable layer (14), wherein a sandwich structure is formed having in this order the first rigid plate (21), the first electrode (12), the elastically deformable layer (14), the second electrode (16) and the second rigid plate (22), wherein the two rigid plates (21, 22) are connected to each other by fixation means (24), the fixation means (24) being configured to allow relative movement of the rigid plates (21, 22) along a direction perpendicular to the plane of the elastically deformable layer (14).

A further aspect of the invention relates to a smart pallet comprising a deck mounted on a plurality of blocks and further comprising at least one such sensor element (10).

## Description

The invention relates to a sensor element for detecting force applied to the sensor element, the sensor element comprising a first electrode and a second electrode arranged inside a housing, wherein the first electrode and the second electrode at least partially overlap. A further aspect of the invention relates to a smart pallet comprising a deck mounted on a plurality of blocks and further comprising at least one such sensor element.

Pallets are frequently used elements used in the transport, storage and logistic global industries. Wooden pallets are produced in various sizes and qualities and are manufactured according to several different norms. In Europe, the most common pallet is the Euro Pallet range as specified by the European Pallet Association. While wooden pallets are most commonly used, pallets produced from other materials such as polymers, metals and composite materials are also known in the art.

EP 0 690 005 A2 discloses a transport pallet comprising a cover plate which is made of a compound mass comprising recycled rubber tire granulate and a binding agent. The cover plate comprises a laminate of at least two layers made of the compound mass with an intermediate metal insert.

Further, it is known in the art to include sensor elements in a pallet so that a so-called "smart pallet" or "intelligent pallet" is formed. In particular, such sensor elements include sensors for the measurement of the weight or load of the pallet.

DE 20 2005 017 815 U1 discloses an intelligent pallet having a top plate in form of a perforated deep-drawn sheet which may be embedded in a recycled polymer and skids made from recycled polymer. The pallet further comprises two strain gauges arranged in a cross-configuration connected to the top plate and may comprise a transponder for transmitting data to a control station.

WO 2017/179985 A1 discloses a pallet having a deck, a skid and a plurality of blocks, spacing the skid from the deck. The blocks comprise a spacer portion and a sleeve portion which extends above and below the spacer portions, wherein the sleeve portions are arranged to protect the edges of the deck and/or skid from impacts. The pallet may further comprise an electronic tag having a wireless radio chip and a weight sensor for detecting a load on the pallet. The weight sensor may be located and mounted in or on a center block, for example beneath the central block, although other locations may also be considered. Further, the electronic tag may include an activity monitor sensor to determine whether the pallet is in movement.

From NL 2020327B1 a pallet with integrated weighing function is known. The pallet has a deck and a load sensor device comprising a weighing element included in a measuring circuit, wherein the weighing element contacts the deck over a contact area such that the weighing element deforms in unity with the deck and an electrical property of the weighing element such as resistance, capacitance or inductance, varies with the deformation of the weighing element. The weighing element may comprise a layered structure wherein a top layer and a bottom are separated by a core layer having a cavity. The formed cavity allows a layer to flex into the cavity. The electronic system comprising the load sensor device is mounted in a cavity of a central block of the pallet.

CN110871942A discloses a smart pallet suitable for carrying multiple objects. The pallet includes a base and a sensing device having a pressure sensor disposed on the bottom of the pallet base. The pressure sensor is electrically connected to a weight indicator.

JP 2006-17466 A discloses a pallet having a frame and a flat placement portion for receiving articles to be carried by the pallet. Four load cells are arranged in recesses at the bottom of the frame. The load cells are connected to a control unit which is installed at the center of the pallet.

WO 2019245371 A1 discloses a method of determining damage in a pallet for supporting loads to be lifted. The pallet comprises a deck as load supporting surface, an excitation means for exciting acoustic vibrations and a vibration sensing device. The method includes exciting the deck of the pallet to vibrate and monitoring a vibrational response.

US 9,524,020 B2 and US 10,310,695 B2 each describe sensors for detecting force imparted onto the sensor. The comprises a grid of wires, wherein parallel lines of conductive traces are disposed on two sensor sheets facing each other with one rotated 90° with respect to the other. Force sensitive resistors are located at the intersections of the grid of the conductive traces. The sensor further comprises an array of protrusions which are in contact with the plurality of intersections in order to transmit force onto the force sensitive resistors. The sensor may further comprise rigid plates wherein the corners of the rigid plates are aligned to the protrusions.

The known pallets including commonly used weight sensors such as strain gauges or load cells are expensive and complex. Additionally, the commonly used weight sensors are difficult to integrate in standard pallet form factors, such as the Euro Pallet, as they require substantial modification of the pallet structure.

Accordingly, it is an object of the present invention to provide a sensor element for detecting force applied to the sensor element that is suitable for the integration in a pallet, in particular in a standard Euro Pallet. A further object of the invention is to provide a simple and reliable smart pallet that includes such a sensor element.

A sensor element for detecting force applied to the sensor element is proposed, the sensor element comprising a first electrode and a second electrode arranged inside a housing, wherein the first electrode and the second electrode at least partially overlap. The housing comprises a first rigid plate and a second rigid plate and the sensor element further comprises an elastically deformable layer, wherein a sandwich structure is formed having in this order the first rigid plate, the first electrode, the elastically deformable layer, the second electrode and the second rigid plate, wherein the two rigid plates are connected to each other by fixation means, the fixation means being configured to allow relative movement of the rigid plates along a direction perpendicular to the plane of the elastically deformable layer.

Preferably, the fixation means allow only the relative movement of the rigid plates along the direction perpendicular to the plane of the elastically deformable layer and are thus configured to prevent motions in other directions and to prevent rotation, shear and tilting motions of the rigid plates relative to each other. The direction perpendicular to the plane of the elastically deformable layer may also be defined as a direction perpendicular to the sandwich structure if all layers are arranged parallel to each other, for example when no external force or pressure is applied to the sensor element.

As pressure is defined as force per area, the proposed sensor element may of course also be used to detect and measure pressure as a force that is applied to a defined area of the sensor element. The area may, for example, be defined as the area of one of the rigid plates.

The first and second electrodes of the sensor element form a capacitor having a capacitance that is dependent on the distance between the two electrode layers. The distance between the two electrodes is maintained by the elastically deformable layer between the two electrodes. When force or pressure (force per area) is applied to the sensor element, the force is transmitted onto the elastically deformable layer via the rigid plates and is compressed depending on the force/pressure applied to it. This compression may then be detected as a change in capacitance of the capacitor formed by the first and second electrodes.

Advantageously, the housing comprising the two rigid plates protects the first and second electrodes as well as the elastically deformable layer from external shocks and provides defined surfaces for the application of force/pressure to be detected by the sensor element. The two rigid plates of the housing preferably form a space in which the elastically deformable layer as well as the two electrodes are located. When no force is applied to the rigid plates of the housing, there may be a gap between the first rigid plate and the first electrode and/or a gap between the second rigid plate and the second electrode.

Preferably, the fixation means of the housing preferably allows only for a movement of the rigid plates along the direction perpendicular to the plane of the sandwich structure. This ensures that the rigid plates may only change their respective distance to each other so that only force/pressure suitable to compress the elastically deformable layer is transmitted onto the electrodes and the elastically deformable layer. Alternatively, the fixation may allow further motion to at least some extend, including a tilting motion of the two rigid plates.

Preferably, the housing has a block or cuboid shape, wherein the first rigid plate and the second rigid plate form two opposite surfaces of the block/cuboid shape.

The length of the rigid plates is preferably between 7 cm and 20 cm, more preferably between 12 cm and 17 cm. The width may be chosen in the same range as the length. Alternatively, in particular in cases where the width is chosen to be less than the length of the rigid plate, the width of the rigid plates is preferably between 5 cm and 20 cm, more preferably between 7 cm and 12 cm. The thickness of the rigid plates is preferably between 0.25 cm and 20 cm, more preferably between 1 cm and 5 cm. The length and the width of the rigid plates are preferably chosen to correspond to the respective dimensions of a block of a standard Euro pallet.

Preferably, the total thickness of the sensor element, in particular the thickness of the housing of the sensor element, corresponds to the value given for the blocks of typical Euro pallets (78 mm) or for other pallets such as the pallet described in EP3442878A1 (85 mm). In particular, the thickness of the rigid plates is preferably adjusted in order to set the desired thickness of the sensor element. Advantageously, a block shaped sensor element having the same thickness as a typical block of a pallet allows easy incorporation of the sensor element by replacing one or more of the blocks of a pallet with the proposed sensor element.

Preferably, the elastically deformable layer comprises or consists of an elastomeric material, an elastomeric foam material, an elastomeric nonwoven mat, a 3D printed deformable elastomeric layer or combinations thereof.

The elastomeric material is preferably selected from thermoplastic polyurethane, natural rubber, synthetic rubber and polymer foams. Suitable synthetic rubbers include nitrile butadiene rubber (NBR), styrene-butadiene rubber (SBR), ethylene propylene diene monomer (EPDM) rubber, chloroprene rubber (CR), epichlorohydrin (ECH) and silicone rubber such as polydimethylsiloxane. Suitable polymer foams include polyurethane foams (not necessarily thermoplastic), rubber foam and polydimethylsiloxane foam.

Preferably, the thickness of the elastically deformable layer, seen in the direction perpendicular to the plane of the elastically deformable layer (the plane of the sandwich structure), is in the range of from 0.1 mm to 10 mm. More preferably, the thickness is in the range of from 0.5 mm to 5 mm. The length and width of the elastically deformable layer are preferably chosen to be less than the respective dimension of the rigid plates. Preferably, the length is from 5 cm to 20 cm, more preferably from 10 cm to 15 cm. The width may be chosen in the same range as the length. Alternatively, in particular in cases where the width is chosen to be less than the length of the elastically deformable layer, the width is preferably from 3 cm to 20 cm, more preferably from 5 cm to 10 cm.

The first and second electrodes form a pair that overlaps at least partially on one side and the other side of the elastically deformable layer in order to form a capacitor having an electrical capacitance. The electrical capacitance of the capacitor formed by the first and second electrodes is, inter alia, further dependent on the overlapping area of the first and second electrode and the dielectric material between the two electrodes, in particular the thickness and the dielectric properties of the elastically deformable layer.

Preferably, the thickness of the elastically deformable layer, an overlapping area of the first and the second electrode and/or the material of the elastically deformable layer are chosen such that, when no force is applied to the sensor element, an electrical capacitance of a capacitor formed by the two electrodes is in the range of from 0.001 pF to 10000 pF. More preferably, said parameters are chosen such that the capacity is in the range of from 5 to 1000 pF when no force is applied to the sensor element and thus the distance between the two electrodes is given by the thickness of the elastically deformable layer with no external load applied.

Preferably, the elastic properties of the elastically deformable layer are chosen to adjust a response of the sensor element to force/pressure. In particular, the more resilient the elastically deformable layer is to compressive forces, the less sensor response and vice versa, the softer the elastically deformable layer is to compressive force, the more sensor response.

Preferably, the first electrode and/or second electrode are configured as conductive area arranged on a surface of a carrier layer, a surface of the elastically deformable layer or a surface of the first and/or second rigid plate.

If a carrier layer is used, the carrier layer is preferably selected from a substrate made from a polyester such as poly(ethylene terephthalate), poly(ethylene naphthalate)- (PEN), a polyimide, a polyurethane, a glass, a fabric and paper. Preferably, the substrate is flexible.

Flexible substrates or layers may be bent and wound onto a roll without breaking. In particular, a flexible substrate/layer in the context of the present invention is a substrate/layer having a minimum bending radius of preferably 100 mm or less, more preferably 20 mm or less and most preferred 2 mm or less. The minimum bending radius in this context is the radius below which the substrate/layer should not be bent in order to avoid damage.

In the case of printing the electrodes on both sides of the elastically deformable layer, an additional adhesion layer (a primer) may be arranged between the elastically deformable layer and the electrodes. Suitable materials for such an adhesion layer include, for example a polyurethane, a polyacrylate, a polyvinyl, and epoxy based materials. The adhesion layer or primer layer may be applied by means of any known printing or coating process.

Preferably, the first electrode and/or second electrode are configured as multiple electrically conducting zones, as conductive trace or as a single compact and continuous area.

The first and second electrodes are preferably configured identically so that the respective conductive areas have the same size and shape. Alternatively, the first and second electrodes may be configured differently, in particular in shape and/or size. For example, while having essentially the same shape, one of the two electrodes may possess larger dimensions than the other, so that one of the electrodes may have, for example, 10% more surface area.

If an electrode is configured as multiple electrically conducting zones, it is preferred that the electrode comprises 2 to 100, more preferably 3 to 10 conductive zones. A conductive zone may have any geometric shape, but regular geometric shapes such as a circle, an oval, a square, a rectangle are preferred. The multiple electrically conducting zones may be electrically interconnected or may be electrically insulated from each other and each of the individual electrically conducting zones may be independently contacted for measuring the capacitance. In such a configuration, multiple capacitors are formed.

If an electrode is configured as a conductive trace, it is preferred that the trace has a meandering shape in order to increase the total area of the respective electrode. In addition, it is possible to configure an electrode as multiple conductive traces which may be electrically interconnected or electrically insulated from each other.

If an electrode has a single compact and continuous area, this area may have any shape such as, for example, a circle, an oval, a square, a rectangle.

Each of the electrodes has at least one electrically conducting zone, at least one conductive trace or a single area that is connected to an electrical contact for measuring electrical capacitance between the first electrode and the second electrode.

If an electrode includes more than one electrically conducting zone or more than one conductive trace, these zones/traces may be electrically interconnected or electrically insulated from each other. Accordingly, each of the first and/or second electrodes may have more than one electrical contact for measuring capacitance. A configuration having multiple zones/traces allows obtaining of information on the load distribution on the sensor element. This in turn allows determining distribution of forces on the sensor element, which is useful in configurations of the housing that allow the rigid plates to deviate from a movement perfectly parallel to one another.

Electrical contacting may, for example, be performed by connecting cables to the electrodes.

Preferably, the first electrode and/or second electrode are configured as printed electrodes, wherein a conductive material is printed onto a surface of a carrier layer, a surface of the elastically deformable layer or a surface of the first or second rigid plate.

Printing the first and/or second electrode onto a flexible material, in particular onto a flexible carrier layer is preferred so that printing of the electrode may be performed in a roll-to-roll process.

Suitable printing processes include, for example, flexographic printing, thermal transfer printing, screen printing and inkjet printing. In the printing process, an ink comprising a conductive material may be used.

Preferably, the conductive material is selected from the group comprising silver, copper, gold, carbon black, carbon nanotube, graphene and combinations thereof, wherein conductive materials comprising silver and copper are preferred.

Alternatively to printing, the electrodes may be obtained by other means. For example, it is possible to coat a surface of the elastically deformable layer with a conductive material and selectively remove unnecessary parts of the conductive material, for example by etching.

The sensor element may furthermore comprise encapsulation layers to prevent water, humidity, or dirt to reach the electrodes. These encapsulation layers can be applied directly on the outer side of the electrodes or may be provided as separate layer or element that can cover part of or the whole sensor element.

In case encapsulation layers applied to the outer side of the electrodes are used, it is preferred to apply them by means of a coating method such as spraying or by means of a printing method such as flexographic printing, thermal transfer printing, screen printing or inkjet printing. Suitable materials for such encapsulation layers include, for example polyacrylates, polyvinyles, polyurea resins, polyurethane resins, polyaspartic resins, epoxy resins, polyurethane-polyurea hybrid resins or mixtures thereof.

In case a separate encapsulation layer is used, the separate layer may be provided in form of a water impermeable sheet. The water impermeable sheet may be arranged between the first electrode and the first rigid plate and/or between the second electrode and the second rigid plate. Additionally or alternatively, a water impermeable material may be arranged to cover the entire housing of the sensor element, wherein a cable feed-through allows establishing of electrical connections with the electrodes.

Suitable materials for water impermeable foils or sheets include, for example. ethylene vinyl acetate (EVA), polyvinyl butyral (PVB) and thermoplastic polyurethane (TPU).

Suitable materials for applying an encapsulation by coating, in particular by spraying, include polyurethane resins, polyurea resins, polyurethane resins, polyaspartic resins, epoxy resins, polyurethane-polyurea hybrid resins or mixtures thereof. Spraying a polyurethane coating is particularly preferred.

The sensor element may further comprise an electrical shielding. The electrical shielding includes shielding means, such as a conductive layer or a conductive foil, which partially or fully encloses the sensor element, in particular the electrodes of the sensor element.

A conductive layer may, for example, be provided by means of a printing process such as flexographic printing, thermal transfer printing, screen printing or inkjet printing, or a coating process such as spraying.

The electrical shielding may be configured as active shielding, wherein the shielding means are connected to the electrical potential of one of the electrodes of the sensor element, or may be configured as passive shielding, wherein the shielding means are connected to a ground potential.

Preferably, the rigid plates are made from wood, a metal, concrete, wood based composite material a plastic material and combinations of said materials. Preferred wood based materials include solid wood, medium-density fibreboard and wood composites. Preferred metal materials include iron, steel and other metallic alloys. Preferred plastic material include polypropylene, and acrylonitrile-butadiene-styrene (ABS).

Preferably, the thickness of the rigid plates is in the range of from 0.5 to 10 cm, more preferred in the range of from 1 cm to 5 cm.

The fixation means for connecting the two rigid plates are preferably configured i) as nuts and bolts, wherein at least one of the rigid plates comprises openings through which the bolts are guided, and/or ii) as flexible tape connecting at least the two rigid plates, and/or iii) as snap fit mechanism comprising an elongated shaft, wherein at least one of the rigid plates comprises openings through which the elongated shaft is guided.

In case the fixation elements are configured as nuts and bolts according to a first variant, it is preferred that holes are drilled through the two rigid plates and have a diameter preferably 10% larger than the diameter of the bolts. The diameter of the bolt is preferably between 0.1 and 2 cm, more preferably 0.5 to 1.0 cm. The number of bolts can vary from 2 to 20, preferably from 3 to 6.

Additionally, recesses are preferably drilled partially through the rigid plates and centered on the through holes to allow the screw head and the nuts not to protrude from the surface of the rigid plate. The distance between the edge of the housing and the center of the hole is preferably of the order of 0.5 cm to 4 cm, more preferably from 1 cm to 2 cm.

In a second variant of the fixation means, a flexible tape is used. In particular, composite tapes are preferred. Suitable examples include thermoplastic unidirectional tapes (UD tapes) where carbon fibers are impregnated with polyether ether ketone (PEEK) or polyamide 12 (PA12) as a thermoplastic matrix, or epoxy as a thermoset matrix. Such tapes are available under the tradenames Fiberfix and Vestape.

In case the fixation elements are configured as a snap fit mechanism according to a third variant, it is preferred that holes are drilled through one of the rigid plates which interact with a snap fit connector fixed to the other one of the rigid plates. The number of snap fit mechanisms can vary from 2 to 20, preferably from 3 to 6.

Preferably, the fixation means are configured to apply a certain force/pressure onto the flexible layer when no force/load is applied to the sensor element for adjusting the initial electrical signal measured by the sensor element when no load is applied. In particular, if the fixation means include nuts and bolts, such a pre-stress force can easily be adjusted by adjusting the distance of the rigid plates by screwing the bolt and nut tighter or looser. This approach can be used as a method for accurate calibration of the sensor element.

A further aspect of the invention is providing of a smart pallet. The smart pallet comprises a deck mounted on a plurality of blocks, at least one of the sensor elements described herein for detecting weight and/or weight distribution applied to it, and a sensor readout system connected to the at least one sensor element.

A typical pallet as used in logistics is made of a wooden, plastic, or composite deck mounted on nine blocks usually made of wood, by the means of nails, screws, or glue. These blocks are preferably similarly mounted on bottom planks in contact with the ground and usually made of wood. The planks are oriented parallel to each other in a length direction of the pallet, allowing to manipulate the pallet with a forklift.

Preferably, the at least one sensor element is arranged in the smart pallet such that the at least one sensor element replaces one of the blocks, or is arranged between one of the blocks and the deck, or is arranged below one of the blocks on the side facing away from the deck, or is arranged between two halves of a block.

The sensor element is preferably mounted using glue. Suitable adhesives include in particular adhesives based on polyvinyl acetate (PVA), polyurethane, cyanoacrylate, epoxide and animal glue.

The sensor readout system of the smart pallet may comprise a single readout unit connected to all sensor elements or may comprise multiple readout units wherein each readout unit is connected to a single one of the sensor elements. The connection between the at least one sensor element and a readout unit of the sensor readout system may, for example, be configured as a cable connection.

The sensor readout system(s) may, for example, be arranged adjacent to a sensor element or a block of the pallet or may be arranged inside a cavity of the housing of the sensor element or a cavity of a block of the pallet. The sensor readout unit(s) of a sensor readout system may be connected to the respective sensor readout system by means of a cable connection or a wireless connection.

The sensor readout system preferably comprises at least an energy source, at least one capacitance readout unit and a data transmission system.

The data transmission system is preferably a wireless data transmission system supporting a standard protocol such as, for example WiFi, lorawan or Bluetooth.

The energy source may, for example, be selected form batteries, piezoelectric generators, thermoelectric generators, triboelectric generators, electromagnetic energy harvesters and solar cells. Energy harvesting means such as piezoelectric generators, thermoelectric generators, triboelectric generators, electromagnetic energy harvesters are particularly preferred and allow the sensor element to be operated independently from external energy sources.

The sensor readout system may be configured as a passive RFID system capable of reading out the value of the capacitance wirelessly. In this case, the RFID communication system can be placed in direct vicinity of the sensor element.

The measurement frequency is preferably set between 40 Hz and 0,00001 Hz, preferably 0,1 to 0,0001 Hz. This low frequency measurement allows getting rid of sporadic touch events typical for pallet handling. The measurement scheme can also include averaging at low frequency of N values of capacitance measured at high frequency.

The proposed smart pallet including the sensor element is suitable for a wide range of storage conditions. In particular, the sensor element is suitable for a temperature range of at least from - 80°C to + 80°C and a relative humidity range of from 0 % to 100 %. In particular, embodiments of the sensor element including an encapsulation layer are well suited for high humidity conditions.

Further, the sensor element is suitable to remain loaded for long times, allowing the smart pallet to reliably deliver measurements even for conditions of prolonged storage of loads on the pallet. Prior art smart pallets based on strain gauges or load cells suffer from an effect known as "sensor creep" wherein the reading of the sensor changes slowly over time.

The invention is described in more detail below on the basis of the drawings, in which:
Figure 1 shows a cross-section of a first embodiment of a sensor element in a schematic side view,
Figure 2a, 2b and 2c show three embodiments of a second electrode arranged on an elastically deformable layer in top view,
Figure 3 shows a cross-section of a second embodiment of the sensor element in a schematic side view,
Figure 4 shows a cross-section of a third embodiment of the sensor element in a schematic side view,
Figure 5a, 5b, 5c and 5d show a part of cross-section of different embodiments of a smart pallet in schematic side views,
Figure 6 shows a cross-section of an embodiment of the smart pallet comprising two sensor elements,
Figure 7 depicts a diagram of a capacitance measurement for cyclic loading and unloading of a sensor element,
Figure 8 depicts a capacitance measurement of a sensor element for increasing load,
Figure 9 depicts a capacitance measurement of a sensor element for manual loading and unloading of a small test mass, and
Figure 10 depicts loading and unloading of large weights applied to a smart pallet.

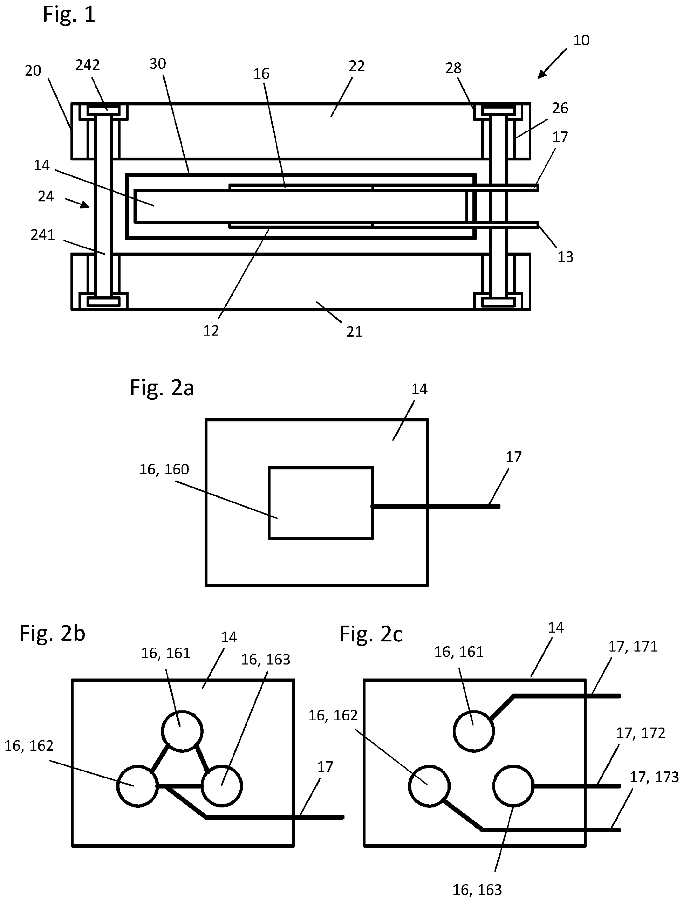

Figure 1 shows a cross-section of a first embodiment of a sensor element 10 in a schematic side view. The sensor element 10 comprises a housing 20 having a first rigid plate 21 and a second rigid plate 22 which are connected to each other by means of fixation means 24.

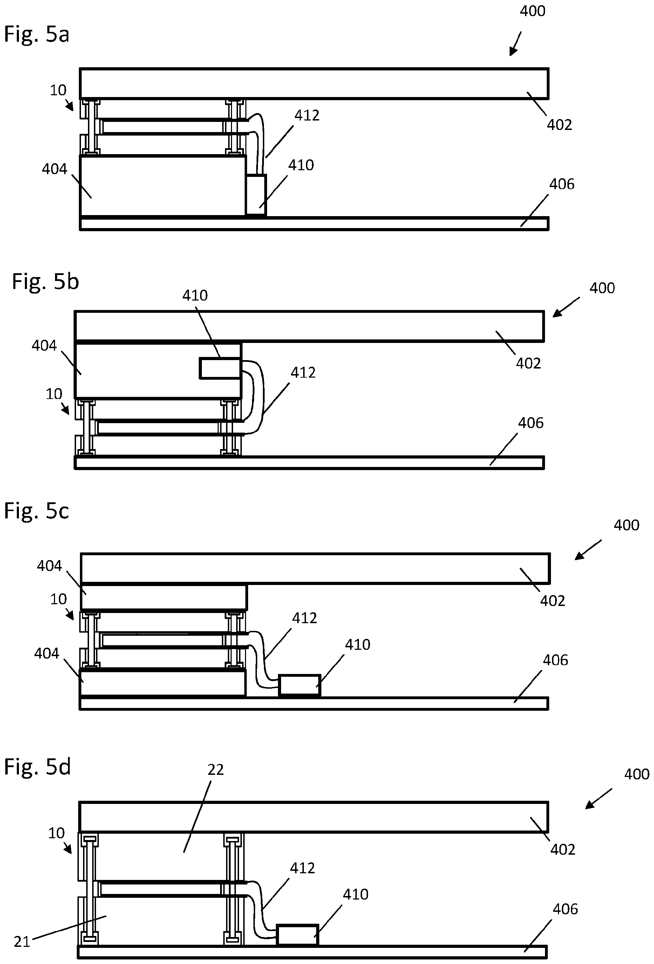

The two rigid plates 21, 22 define a gap in which an elastically deformable layer 14 is located. In the first embodiment of the sensor element 10 of figure 1, a first electrode 12 is located on a first side of the elastically deformable layer 14 which is facing the first rigid plate 21, and a second electrode 16 is located on a second side of the elastically deformable layer 14 which is facing the second rigid plate 22. Additionally, the sensor element 10 of figure 1 comprises an encapsulation 30 in the form of a water impermeable material which is wrapped around the elastically deformable layer 14 carrying the two electrodes 12, 16. For contacting of the electrodes 12, 16, a first electrical contact 13 in the form of a wire is connected to the first electrode 12 and a second electrical contact 17 in the form of a wire is connected to the second electrode 16. The wires are fed through the encapsulation 30 so that an electrical connection with, for example, a sensor readout system 410, see figures 5a to 5d may be established.

The electrodes 12, 16 of the sensor element 10 shown in figure 1 have been obtained by direct printing of a conductive ink onto the respective surfaces of the elastically deformable layer 14. However, it is also possible to obtain electrodes 12, 16 by other means. Also, it is possible to arrange a first carrier layer having the first printed electrode 12 between the first rigid plate 21 and the elastically deformable layer 14 and a second carrier layer having the second electrode 16 between the elastically deformable layer 14 and the second rigid plate 22.

The sensor element 10 of figure 1 comprises a sandwich structure having in this order the first rigid plate 21, the encapsulation 30, the first electrode 12, the elastically deformable layer 14, the second electrode 16, the encapsulation 30 and the second rigid plate 22.

In the depiction of figure 1, gaps are shown between the encapsulation 30 and the electrodes 12 and 16 as well as between the encapsulation 30 and the rigid plates 21, 22 in order to more clearly show the different parts of the sensor element 10. However, these gaps are not required and may be omitted.

The fixation means 24 are configured to allow relative movement between the two rigid plates 21, 22 along a direction perpendicular to the plane defined by the sandwich structure and thus also perpendicular to the plane of the elastically deformable layer 14. In the first embodiment of figure 1, the fixation means 24 are configured as nuts 242 and bolts 241. In the example shown in figure 1, two bolts 241 and two corresponding nuts 242 are visible. Preferably, at least three bolts 241 and corresponding nuts 242 are used. For example, four bolts 241 and corresponding nuts 242 are used, one in each of the four corners of the rigid plates 21, 22. The rigid plates 21, 22 each comprise through holes or openings 26 through which the bolts 241 are guided. Additionally, recesses 28 centered on the openings 26 are provided in order to allow the heads of the bolts 241 as well as the nuts 242 not to protrude from the rigid plates 21, 22. The through holes or openings 26 are drilled through the two rigid plates 21, 22 and have a diameter which is preferably 10% larger than the diameter of the bolts 241 so that the bolts can easily be guided through the openings 26. While the fixation means 24 restrict motions which are not a movement along the direction perpendicular to the plane defined by the sandwich structure, the fixation means 24 allow for a small tilt of the rigid plates 21, 22 with respect to each other. If the electrodes 12, 16 are appropriately structured, for example by the inclusion of three electrode zones 161, 162, 163, see figure 2c, so that three electrically independent capacitors are formed, this may be used to detect the distribution of force/pressure onto the sensor element 10.

The first electrode 12 and the second electrode 16 form a pair that overlaps at least partially on one side and the other of the elastically deformable layer 14 in order to form an electrical capacitance. The two electrical contacts 13, 17 allow measuring of the capacitance between said electrodes 12, 16. The electrical capacitance of the capacitor formed by the two electrodes 12, 16 is inter alia dependent on the distance between the two electrodes 12, 16. When load or force is applied to the sensor element 10, the elastically deformable layer 14 is compressed and the distance between the two electrodes 12, 16 is reduced which increases the electrical capacitance. If the load is removed, the elastically deformable layer 14 expands again to its original thickness and thus increases the distance between the two electrodes 12, 16 and thus decreases the electrical capacitance.

The housing 20 including the two rigid plates 21, 22 ensures that the capacitor formed by the two electrodes 12, 16 is protected from external shock and further ensures that forces/pressures applied to the sensor element 10 compress the elastically deformable layer 14 in a defined an reproducible manner. Further, the encapsulation 30 protects the electrodes 12, 16 as well as the elastically deformable layer 14 from water, humidity, dirt and external shocks, ensuring reliable operation even in rough environmental conditions.

Figure 2a, 2b and 2c show three embodiments of a second electrode 16 arranged on an elastically deformable layer 14 in top view. The same configurations also apply to the first electrode 14. The first and second electrodes 12, 16 may be configured identically or may use different configurations.

Figure 2a shows a first embodiment of a second electrode 16 arranged on an elastically deformable layer 14. In the first embodiment, the second electrode 16 is configured as a single electrode area 160 that is connected to a second electrical contact 17. In the depicted example, the electrode area 160 is of rectangular shape.

Figure 2b shows a second embodiment of a second electrode 16 arranged on an elastically deformable layer 14. In the second embodiment, the second electrode 16 is configured as a three electrode zones 161, 162, 163 which are electrically interconnected and are connected to a second electrical contact 17. In the depicted example of figure 2b, the electrode zones 161, 162, 163 are of circular shape. However, any other shape may also be used.

Figure 2c shows a third embodiment of a second electrode 16 arranged on an elastically deformable layer 14. In the third embodiment, the second electrode 16 is configured as a three electrode zones 161, 162, 163 that are electrically insulated and each of the electrode zones 161, 162, 163 is individually electrically contacted with second contacts 171, 172, 173.

Different embodiments of the shown electrode configurations of figures 2a, 2b and 2c may be combined. For example, a combination of the configuration of the second embodiment of figure 2b for the first electrode 12 and the configuration of the third embodiment of figure 2c for the second electrode 16 may be used to form three electrically independent capacitors, allowing detection of the distribution of force/pressure onto the sensor element 10.

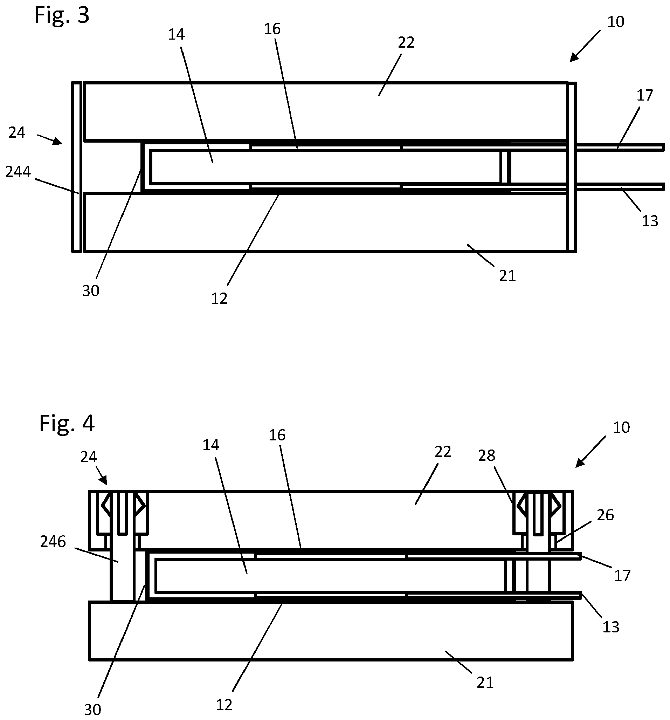

Figure 3 shows a cross-section of a second embodiment of a sensor element 10 in a schematic side view. The sensor element 10 of the second embodiment is identical to the sensor element 10 of the first embodiment except for the configuration of the fixation means 24. Also, the gaps between the encapsulation 30 and the rigid plates 21, 22 as well as between the encapsulation 30 and the electrodes 12 and 16 have been omitted.

In the second embodiment of the sensor element 10 shown in figure 3, the fixation means 24 are configured as a tape 244 which at least partially surrounds the sides of the sensor element 10 and connected the two rigid plates 21, 22. The tape 244 may fully surround the sides of the sensor element 10 except for an opening for the first and second electrical contacts 13, 17.

Figure 4 shows a cross-section of a third embodiment of the sensor element 10 in a schematic side view. The sensor element 10 of the third embodiment is identical to the sensor element 10 of the first embodiment except for the configuration of the fixation means 24. Also, the gaps between the encapsulation 30 and the rigid plates 21, 22 as well as between the encapsulation 30 and the electrodes 12 and 16 have been omitted.

In the third embodiment of the sensor element 10 shown in figure 4, the fixation means 24 are configured as snap fit mechanisms 246 attached to one of the rigid plates 21, 22 that interact with openings 26 in the other one of the rigid plates 21, 22. In the example shown in figure 4, four snap fit mechanisms 246 are visible. Preferably, at least three snap fit mechanisms 246 are used. For example, four snap fit mechanisms 246 are used, one in each of the four corners of the rigid plates 21, 22. The snap fit mechanisms 246 may, for example, be configured as cylindrical shaft having a resilient snap element attached to an end of the shaft. The snap element allows the snap fit mechanism 246 to be guided through an opening 26 in one direction, but prevents removal of the snap fit mechanism 246 in the opposing direction.

In this third embodiment, it is preferred to produce at least the rigid plate 21, 22 having the snap fit mechanisms 246 in a molding process such as injection molding. In this case, the snap fit mechanisms 246 and the respective rigid plate are preferably a single piece.

As can be seen in figure 4, recesses 28 are centered on each of the opening 26 in order to allow the respective snap fit mechanism 246 not to protrude from the rigid plates 21, 22.

Figure 5a, 5b, 5c and 5d each show a part of cross-section of different embodiments of a smart pallet 400 in schematic side views.

The example smart pallets 400 of figures 5a to 5d for use in logistic applications comprise a deck 402, for example made from wood, which is mounted on nine blocks 404. The blocks 404, of which in figures 5a to 5d only one is visible, are similarly mounted on planks 406 in contact with the ground and usually made of wood. The planks 406 are oriented parallel to each other in a length direction of the pallet, allowing to manipulate the smart pallet 400 with a forklift.

The smart pallets 400 of figures 5a to 5d comprise at least one sensor element 10 which is either arranged on, in or bellow one of the blocks 404 or replaces one of the blocks 404. The smart pallets 400 of figures 5a to 5d further comprise a sensor readout system 410 which is connected to the sensor element 10 by means of cables 412. The sensor readout system 410 is at least configured to measure an electrical capacitance of the sensor element 10 and to store, indicate and/or transmit the obtained measurement.

In the first embodiment of the smart pallet 400 shown in figure 5a, one of the blocks 404 is of reduced thickness so that one of the described sensor elements 10 can be fitted in the space between the top surface of the block 404 and the bottom surface of the deck 402. The sensor readout system 410 is in this embodiment attached to one of the side surfaces of the block 404.

In the second embodiment of the smart pallet 400 shown in figure 5b, one of the blocks 404 is of reduced thickness so that one of the described sensor elements 10 can be fitted in the space between the top surface of a plank 406 and the bottom surface of the block 404. The sensor readout system 410 is in this embodiment inserted into a cavity of the block 404.

In the third embodiment of the smart pallet 400 shown in figure 5c, one of the blocks 404 is of reduced thickness and split into two halves so that one of the described sensor elements 10 can be fitted in the space between the two halves of the block 404. The sensor readout system 410 is in this embodiment arranged on one of the planks 406 next to the block 404.

In the fourth embodiment of the smart pallet 400 shown in figure 5d, one of the blocks 404 has been replaced by one of the described sensor elements 10 which is configured to have the same thickness as one of the blocks 404. In order to adjust the thickness, it is preferred to increase the thickness of the two rigid plates 21, 22. The sensor readout system 410 is in this embodiment arranged on one of the planks 406 next to the sensor element 10.

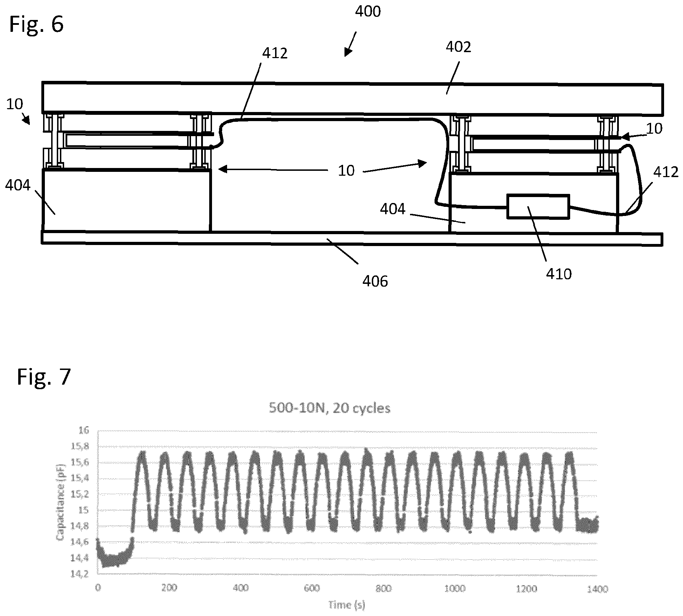

Figure 6 shows a part of a cross-section of a fifths embodiment of a smart pallet 400 comprising two sensor elements 10.

The smart pallet 400 of figure 6 comprises a deck 402, for example made from wood, which is mounted on nine blocks 404 of which only two are visible in the part shown in figure 6. The blocks 404 are similarly mounted on planks 406 in contact with the ground and usually made of wood. The planks 406 are oriented parallel to each other in a length direction of the pallet, allowing to manipulate the smart pallet 400 with a forklift.

The smart pallets 400 of figures 6 comprises two sensor elements 10 which are each arranged on a respective block 404 of reduces thickness so that the sensor elements 10 are respectively arranged between a top surface of a block 404 and a bottom surface of the deck 402. The smart pallet 400 further comprises a sensor readout system 410 which is connected to both sensor elements 10 by means of cables 412. The sensor readout system 410 is at least configured to measure electrical capacitance of the sensor elements 10 and to store, indicate and/or transmit the obtained measurement. In the shown example embodiment of figure 6, the sensor readout system 410 is arranged inside a cavity of one of the blocks 404.

Figure 7 depicts a diagram of a capacitance measurement for cyclic loading and unloading of a sensor element.

The example sensor element comprises a rigid housing having two rectangular rigid wood plates connected by four bolts and screws, one arranged at each corner of the rigid plates. The length and width of the rigid plates were chosen to be slightly smaller than the dimensions of a block of a standard Euro Pallet. In the example sensor element, the width was chosen to be 9.6 cm and the length is chosen to be 13.5 cm. The thickness of the rigid plates was chosen to be 1.9 cm. Between the two rigid plates, an elastically deformable layer made from thermoplastic polyurethane (TPU) foam is arranged having a width of 7 cm, a length of 10 cm and a thickness of 0.5 mm. Electrodes are arranged on both sides of the elastically deformable layer. The electrodes are configured as two independent electrically conducting zones, wherein each of the zones has a disc shape with a radius of 12 mm. The electrically conducting zones are printed on carrier layers separate from the elastically deformable layer using an ink comprising silver as conductive material. As carrier layers, 75 µm thick polyethylene-terephthalate (PET) foils were used.

Each of the two independent electrically conducting zones is contacted with a wire bonded to the respective zone. Thus, two independent capacitors are formed by the stack having in this order a first carrier layer carrying the first electrodes, the elastically deformable layer and a second carrier layer carrying the second electrodes. The carrier layers were arranged in this stack such that the electrodes are facing towards the elastically deformable layer. For the measurements presented in figures 7 to 10, the two independent capacitors of the example sensor element were connected in parallel to readout electronics.

For the measurements, a readout electronic was provided based on an Eval AD7747 evaluation board for capacitance measurement available from Analog Devices which was paired with a NUCLEO-L053R8 single board computer available from STMicroelectronics programed to perform the measurement.

The example sensor does not include an electrical shielding. Thus, the observed absolute values of the measured capacitance are dependent on the respective environmental conditions and vary between different measurements performed under different conditions.

For the measurement shown in figure 7, a force between 10 N and 500 N was cyclically applied to the sensor element and the capacitance was measured continuously.

The graph of figure 7 depicts the measurement result of the capacitance in pF over time in s. As can be seen from the graph, the capacitance of the sensor element changes with the applied load in a reproducible manner and the response is constant over all 20 depicted measurement cycles.

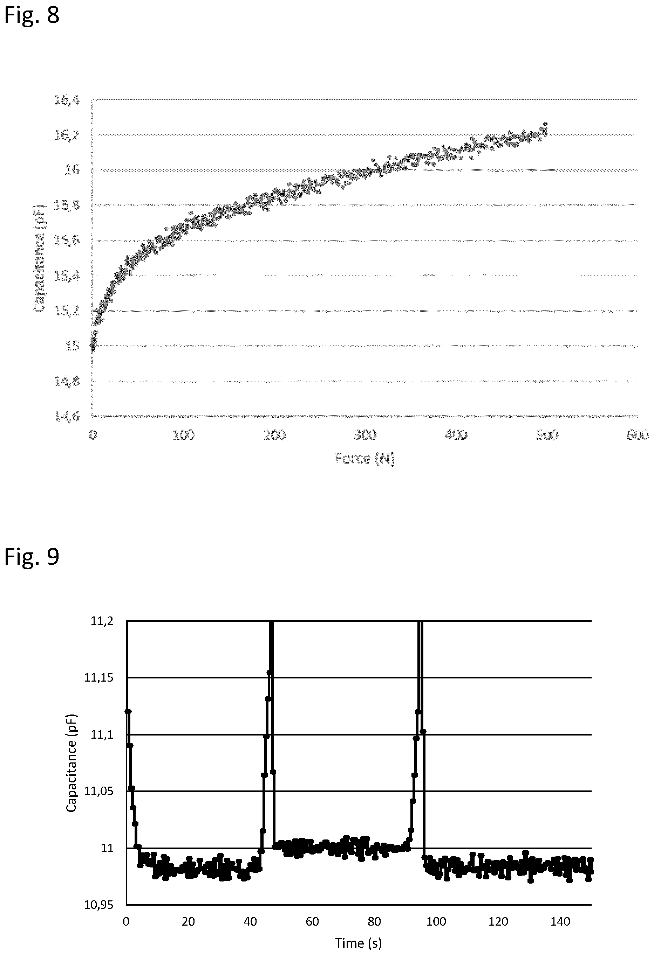

Figure 8 depicts a capacitance measurement of the sensor element for increasing load when mounted in a pallet to form a smart pallet. The force exerted onto the sensor element as described with respect to figure 7 was slowly increased from about 0 N to 500 N. The detected capacitance increases from about 15 pF for about 0 N to about 16.2 pF for 500 N. The measurements exhibit only little scattering of the obtained capacitance values indicating reliable operation of the sensor element.

Figure 9 depicts a capacitance measurement of a sensor element for manual loading and unloading of a small test mass of 100 g with the sensor mounted in a pallet to form a smart pallet.

In the graph of figure 9 two steps are clearly visible indicating the time when the test mass was manually loaded and manually unloaded. The sensor element used in this test did not include an electrical shielding. Due to this lack of shielding, spikes in the measured capacitance are visible at the position of the steps. These spikes are caused by interference between the hand of the experimenter when loading and unloading the test mass and the electrodes. The experimenter provides a large electrical capacitance which interferes with the capacitance of the sensor element and this interference is accordingly detected during the measurement. Such interference may easily be avoided by the incorporation of electrical shielding surrounding the electrodes of the sensor element.

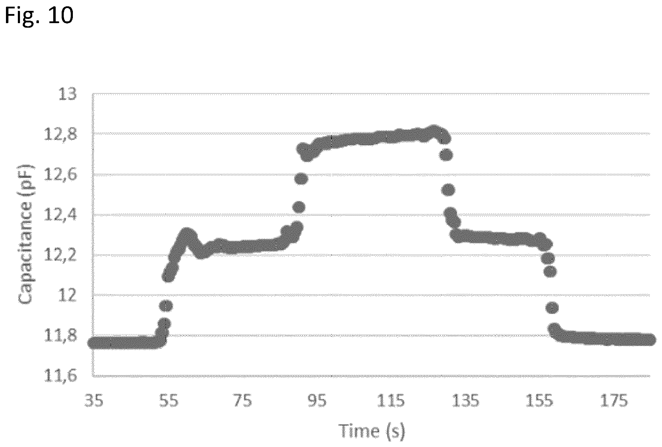

Figure 10 depicts loading and unloading of large weights applied to a smart pallet comprising the sensor element. In the measurement shown in figure 10, weights are loaded and unloaded onto the pallet. Initially, no additional weight is placed on the pallet. In a first step, a weight of 65 kg is loaded into the pallet. In a second step, an additional weight is loaded onto the pallet, increasing the total weight to 135 kg. In a third step, the additional weight is unloaded, reducing the total weight to 65 kg. In a fourth step, all weights are removed so that the load on the pallet is again 0 kg.

In the graph of figure 10, all of the loading and unloading steps are clearly visible. Also, it is visible that the measured capacitance for identical loading of the smart pallet is the same indicating that the measurements are reproducible.

### List of reference numerals

- 10: sensor element

- 12: first electrode
- 13: first electrical contact
- 14: elastically deformable layer
- 16: second electrode
- 17: second electrical contact

- 160: electrode area
- 161, 162, 163: electrode zones

- 171, 172, 173: first, second, third connection

- 20: housing
- 21: first rigid plate
- 22: second rigid plate
- 24: fixation means
- 26: opening
- 28: recess

- 241: bolt
- 242: nut

- 244: tape

- 246: snap fit mechanism

- 30: encapsulation

- 400: smart pallet
- 402: deck
- 404: block
- 406: plank

- 410: sensor readout system
- 412: cable

## Claims

1. Sensor element (10) for detecting force applied to the sensor element (10), the sensor element (10) comprising a first electrode (12) and a second electrode (16) arranged inside a housing (20), wherein the first electrode (12) and the second electrode (16) at least partially overlap, **characterized in that** the housing (20) comprises a first rigid plate (21) and a second rigid plate (22) and **in that** the sensor element (10) further comprises an elastically deformable layer (14), wherein a sandwich structure is formed having in this order the first rigid plate (21), the first electrode (12), the elastically deformable layer (14), the second electrode (16) and the second rigid plate (22), wherein the two rigid plates (21, 22) are connected to each other by fixation means (24), the fixation means (24) being configured to allow relative movement of the rigid plates (21, 22) along a direction perpendicular to the plane of the elastically deformable layer (14).

2. Sensor element (10) according to claim 1, **characterized in that** the elastically deformable layer (14) comprises or consists of an elastomeric material, an elastomeric foam material, an elastomeric nonwoven mat, a 3D printed deformable elastomeric layer or combinations thereof.

3. Sensor element (10) according to claim 2, **characterized in that** the elastomeric material is selected from thermoplastic polyurethane, natural rubber, synthetic rubber and polymer foams.

4. Sensor element (10) according to any one of claims 1 to 3, **characterized in that** the thickness of the elastically deformable layer (14), seen in the direction perpendicular to the plane of the elastically deformable layer (14), is in the range of from 0.1 mm to 10 mm.

5. Sensor element (10) according to any one of claims 1 to 4, **characterized in that** the thickness of the elastically deformable layer (14), an overlapping area of the first and the second electrode (12, 16) and/or the material of the elastically deformable layer (14) are chosen such that, when no force is applied to the sensor element (10), an electrical capacitance of a capacitor formed by the two electrodes (12, 16) is in the range of from 0.001 pF to 10000 pF.

6. Sensor element (10) according to any one of claims 1 to 5, **characterized in that** the first electrode (12) and/or second electrode (16) are configured as conductive areas arranged on a surface of a carrier layer, a surface of the elastically deformable layer (16) or a surface of the first and/or second rigid plate (21, 22).

7. Sensor element (10) according to claim 6, **characterized in that** the carrier layer is selected from a flexible substrate made from a polyester, a polyimide, a polyurethane, a glass, a fabric and paper.

8. Sensor element (10) according to any one of claims 1 to 7, **characterized in that** the first electrode (12) and/or second electrode (16) are configured as multiple electrically conducting zones (161, 162, 163), as conductive trace or as a single compact and continuous area (160).

9. Sensor element (10) according to any one of claims 1 to 8, **characterized in that** the first electrode (12) and/or second electrode (16) are configured as printed electrodes, wherein a conductive material is printed onto a surface of a carrier layer, a surface of the elastically deformable layer (14) or a surface of the first and/or second rigid plate (21, 22).

10. Sensor element (10) according to claim 9, **characterized in that** the conductive material is selected from the group comprising silver, copper, gold, carbon black, carbon nanotube, graphene and combinations thereof.

11. Sensor element (10) according to any one of claims 1 to 10, **characterized in that** the rigid plates (21, 22) are made from wood, a metal, concrete, wood based composite material a plastic material and combinations of said materials.

12. Sensor element (10) according to any one of claims 1 to 11, **characterized in that** the thickness of the rigid plates (21, 22) is in the range of from 0.5 cm to 10 cm.

13. Sensor element (10), **characterized in that** the fixation means (24) are configured as
i) nuts (242) and bolts (241), wherein at least one of the rigid plates (21, 22) comprises openings (26) through which the bolts (241) are guided,
ii) flexible tape (244) connecting at least the two rigid plates (21, 22), and/or
iii) snap fit mechanism (246) comprising an elongated shaft, wherein at least one of the rigid plates (21, 22) comprises openings (26) through which the elongated shaft is guided.

14. Smart pallet (400) comprising a deck (402) mounted on a plurality of blocks (404), **characterized in that** the smart pallet (400) further comprises at least one sensor element (10) according to any one of claims 1 to 13 for detecting weight and/or weight distribution applied to it, and a sensor readout system (410) connected to the at least one sensor element (10).

15. Smart pallet (400) according to claim 14, **characterized in that** the at least one sensor element (10) is arranged such that the at least one sensor element (10)
i) replaces one of the blocks (404), or
ii) is arranged between one of the blocks (404) and the deck (402), or
iii) is arranged below one of the blocks (404) on the side facing away from the deck (402), or
iv) is arranged between two halves of a block (404).
